# EUROPEAN PATENT SPECIFICATION

(11) **EP 0 599 425 B1**
(45) Date of publication and mention of the grant of the patent: **15.10.1997**
(21) Application number: 93203280.8
(22) Date of filing: 23.11.1993
(51) Int. Cl.: A24F 23/02, B32B 27/12

(54) **Tobacco pouch**
Tabakbeutel
Blague à tabac

(30) Priority: 24.11.1992 NL 9202044
(43) Date of publication of application: 01.06.1994
(73) Proprietor: Sara Lee/DE N.V., 3532 AA Utrecht (NL)
(72) Inventor: De Lange, Piet, NL-8501 EN Joure (NL); Van den Berg, Ewoud Alphonsus, NL-8453 JJ Oranjewoud (NL); Spannenburg, Cornelis Peke, NL-8517 HM Scharsterbrug (NL); Meenks, Herman, NL-3067 DC Rotterdam (NL)
(74) Representative: Smulders, Theodorus A.H.J., Ir.

(56) References cited:
- FR-A- 2 468 318
- US-A- 3 471 005
- US-A- 3 676 242

## Description

This invention relates to a tobacco pouch of synthetic laminate, comprising a pouch consisting of a front panel and a rear panel interconnected at the sides and a flap adjoining the rear panel.

Generally, packages for cut tobacco, for instance for pipe tobacco, tobacco for rolling cigarettes, or chewing-tobacco are manufactured from synthetic materials. The most current are two different types of packages, viz. the so-called wrapping pouch and the side-fold or block-bottom pouch. The wrapping pouch is the simplest form and involves a synthetic film or laminate being folded over along a folding seam, whereafter the sides are sealed together. Adjoining the rear panel is a flap which can be wrapped around the pouch one or more times and can be adhered to it, for instance with adhesive tape.

The side-fold pouch or block-bottom pouch, as the names suggest, comprises folded side panels and bottom, so that the pouch acquires a more or less block-shaped appearance. A pouch of this type, too, is manufactured from synthetic film. In practice, such a pouch often consists of a double film with a loosely interposed paper inlay, which may be printed.

When packaging cut tobacco, it is of importance for the tobacco pouch to have sufficient moisture barrier properties in order to prevent the tobacco from drying out. Further, there is a need for a tobacco pouch whose appearance is not immediately associated with synthetic plastics materials by the user.

From the viewpoint of moisture barrier properties, a great number of proposals have previously been made for improving the conventional type of tobacco pouch. Canadian patent specification 871,095, for instance, discloses the manufacture of a tobacco pouch from a laminate made up of a film substrate, such as a polyester or polypropylene, and more specifically a polyester coated with polyvinylidene chloride. Provided thereon is a nonwoven, for instance cellulose or polyester fiber, and finally a polyolefin to impart heat-sealable properties.

U.S. Patent No. 3,447,428 relates to a tobacco pouch manufactured from a laminate consisting of two layers of synthetic material with interposition of aluminum film.

U.S. Patent No. 3,600,267 relates to a packaging film, *inter alia* for tobacco, which consists of polyethylene, ethylene vinyl acetate copolymer, polypropylene and vinylidene chloride-acrylonitrile polymer.

Although a number of the abovementioned proposals yield reasonably useful tobacco pouches, the disadvantage remains that the laminates to be used have a rather complex structure and, accordingly, rather complex equipment is required for the manufacture thereof. Moreover, generally a supplemental operation is necessary if the tobacco pouches are to be printed. Such a supplemental operation, for instance a Corona treatment, adversely affects the quality of the tobacco pouch.

Another disadvantage of a number of the conventional tobacco pouches relates to their reprocessability. Owing to the structure used, which involves the combination of a number of different materials, for instance paper with synthetic material, or aluminum with synthetic material, the tobacco pouch does not meet the requirements set with regard to good reprocessability.

The object of the present invention is to provide a tobacco pouch which does not have the disadvantages outlined above. Accordingly, the present invention relates to a tobacco pouch of synthetic laminate, comprising a pouch consisting of a front panel and a rear panel interconnected at the sides and a flap adjoining the rear panel, which is characterized in that the synthetic laminate consists of a synthetic film on the inside of the pouch, having laminated thereto on the outside a web of spun high-density polyethylene fibers.

Surprisingly, it has been found that in this particularly simple manner, using a double-layer laminate, an excellent tobacco pouch can be obtained with good moisture barrier properties, while further a number of other unexpected advantages are present as well.

The tobacco pouch of the present invention is preferably a so-called wrapping pouch, although it is also possible to manufacture a block-bottom pouch from the laminate by providing the desired construction and folding lines. In that case, it is not necessary to use more than one layer lying loosely relative to each other, which is advantageous from an environmental point of view.

The synthetic film used on the inside of the tobacco pouch is preferably of a thickness between 15 and 125 µm. Thicknesses of less than 15 µm yield a tobacco pouch which, it is true, possesses sufficient strength, but which does not possess sufficient moisture barrier properties. From the viewpoints mentioned, the use of thicknesses exceeding 125 µm as such does not have any disadvantages, but it does not have any advantages either. For reasons of processability and cost price, however, it is preferred not to use excessive thicknesses.

The material of the synthetic film can be any suitable synthetic material, such as polyolefins, polyesters and/or polyamides. Suitable polyolefins are the homopolymers and copolymers of ethylene and propylene. It is also possible, however, to use higher olefins, such as butene. More specifically, the following polyolefins are suitable: polyethylene, polypropylene, copolymers of ethylene with higher olefins, copolymers of ethylene with vinyl acetate and/or acrylate and/or methacrylate, copolymers of propylene, and polybutene. Specific suitable polyesters include polyethylene terephthalate, whilst especially nylon 6, 66 and 12 are eligible as polyamide. More particularly, a preference is expressed for polyethylene or combinations of two or more polyethylenes with sufficient moisture barrier properties. Suitable options include linear low-density polyethylene, conventional (i.e. high pressure) low-density polyethylene, high-density polyethylene, medium-density polyethylene and VLDPE. Generally, the preference is for one of the types of low-density polyethylene, since with them by far the best results are obtained.

Additives may be incorporated into the synthetic material, such as dyes, pigments, stabilizers, processing aids and the like.

The exterior of the tobacco pouch consists of a nonwoven of HDPE fibers laminated to the synthetic material. Generally, for this purpose spun HDPE fibers are used which have been processed into a nonwoven in conventional manner. This nonwoven may advantageously be bonded by means of a conventional binder or by heating the nonwoven, though with retention of the typical nonwoven structure.

Surprisingly, it has been found that combining a synthetic film, and more particularly a polyethylene film, with a HDPE nonwoven yields a laminate from which an excellent tobacco pouch can be manufactured. The tobacco pouch may moreover be printed on the exterior, the resultant appearance being such as to bear a strong resemblance to a tobacco pouch manufactured from paper. From the viewpoint of acceptance by the consumer this is a major advantage. Accordingly, unlike the known tobacco pouches from synthetic film, the tobacco pouch of the present invention does not have the typical synthetic plastics appearance. It is also possible to print the layer of HDPE fibers on the inside prior to lamination.

Another major advantage of the tobacco pouch according to the invention is that it is possible to provide a window in the tobacco pouch through local heating. The point is that by heating the laminate locally, the structure of the HDPE nonwoven is fused, so that a transparent window is formed. This provides a major advantage in that the user can see at a single glance how much tobacco is left in the pouch. Naturally, this applies only if the synthetic film does not contain any coloring or pigments.

The materials of the tobacco pouch are conventional, commercially available materials. The HDPE nonwoven can for instance be obtained from the firm of DuPont under the trade name Tyvek. The various types of synthetic plastics material are available on a large scale in large amounts, either as granulate or as ready-made film.

The two components of the laminate can be laminated to each other in conventional manner. Possible techniques include extrusion of a synthetic film onto the nonwoven, with the warm synthetic material bonding immediately to the nonwoven. It is also possible to bond the two layers together using heat or a suitable bonding agent. This technology is available on a large scale to a person of ordinary skill in the art. Prior, during or after manufacture of the laminate, the HDPE fiber side can be further provided with a so-called release coat of lacquer so as to prevent the laminate from being damaged by the adhesive strip.

Further, the flap edge of the laminate obtained may be reinforced by heating, so as to prevent the HDPE nonwoven from being damaged when the adhesive strip is removed.

In the case where the construction of the tobacco pouch requires that it be provided with folding lines, the layer of HDPE fibers can advantageously be provided, prior to lamination, with a perforation at the location of the future folding lines, so as to improve the fold.

The manufacture of the tobacco pouch and the filling thereof can be effectuated in conventional manner using equipment known for that purpose. It is noted that this is a major advantage of the tobacco pouch according to the invention. No new equipment is required for its application.

The invention will now be further explained in and by an example which is not intended as a limitation.

### Example

Using a glue-coating technique, a laminate was manufactured from a layer of 100 µm white-colored LPDE and 42 g/m² nonwoven of HDPE fibers (Tyvek™). Prior to lamination the nonwoven had been printed and provided with a release coating of lacquer.

A roll of the thus obtained laminate was processed in a conventional machine into a wrapping pouch and filled with tobacco.

## Claims

1. A tobacco pouch of synthetic laminate, comprising a pouch consisting of a front panel and a rear panel interconnected at the sides and a flap adjoining the rear panel, characterized in that the synthetic laminate comprises at least a synthetic film on the inside of the pouch, having laminated thereto on the outside a web of spun high-density polyethylene fibers.

2. A tobacco pouch according to claim 1, characterized in that said synthetic film on the inside has a thickness between 15 and 125 µm.

3. A tobacco pouch according to claim 1 or 2, characterized in that the synthetic film is manufactured from polyolefin, polyester and/or polyamide.

4. A tobacco pouch according to claim 3, characterized in that the synthetic film is manufactured from polyethylene.

5. A tobacco pouch according to claim 4, characterized in that the polyethylene film is made from LLDPE, LDPE, VLDPE, MLDPE, HDPE or mixtures of two or more of these materials.

6. A tobacco pouch according to claims 1-5, characterized in that the exterior is printed.

7. A tobacco pouch according to claims 1-6, characterized in that a window has been provided in the pouch by locally heating the laminate.

8. A tobacco pouch according to claims 1-7, characterized in that it is designed as a block-bottom pouch or as a wrapping pouch.

## Patentansprüche

1. Tabakbeutel aus synthetischem Laminat, umfassend einen Beutel, bestehend aus einem vorderen Feld und einem hinteren Feld, die an den Seiten miteinander verbunden sind und einer Klappe, die an das hintere Feld grenzt, dadurch gekennzeichnet, daß das synthetische Laminat mindestens eine synthetische Folie an der Innenseite des Beutels aufweist, auf die an der Außenseite eine Bahn aus gesponnenen High-Densitiy Polyethylenfasern laminiert ist.

2. Tabakbeutel nach Anspruch 1, dadurch gekennzeichnet, daß die synthetische Folie an der Innenseite eine Dicke zwischen 15 und 125 µm hat.

3. Tabakbeutel nach Anspruch 1 oder 2, dadurch gekennzeichnet, daß die synthetische Folie hergestellt ist aus Polyolefin, Polyester und/oder Polyamid.

4. Tabakbeutel nach Anspruch 3, dadurch gekennzeichnet, daß die synthetische Folie hergestellt ist aus Polyethylen.

5. Tabakbeutel nach Anspruch 4, dadurch gekennzeichnet, daß die Polyethylenfolie hergestellt ist aus LLDPE, LDPE, VLDPE, MLDPE, HDPE oder Gemischen von zwei oder mehreren dieser Materialien.

6. Tabakbeutel nach den Ansprüchen 1 - 5, dadurch gekennzeichnet, daß er von außen bedruckt ist.

7. Tabakbeutel nach den Ansprüchen 1 - 6, dadurch gekennzeichnet, daß ein Fenster, hergestellt in dem Beutel durch lokales Erwärmen des Laminats, vorhanden ist.

8. Tabakbeutel nach den Ansprüchen 1 - 7, dadurch gekennzeichnet, daß er als Kreuzbodenbeutel oder als Wickelbeutel ausgeführt ist.

## Revendications

1. Blague à tabac en stratifié synthétique, comportant une blague constituée d'un panneau avant et d'un panneau arrière reliés sur les côtés et d'un rabat attenant au panneau arrière, caractérisée en ce que le stratifié synthétique comprend au moins un film synthétique à l'intérieur de la blague, l'extérieur de la blague ayant été laminé avec une toile tissée de fibres en polyéthylène haute-densité.

2. Blague à tabac selon la revendication 1, caractérisée en ce que ledit film synthétique interne a une épaisseur comprise entre 15 et 125 µm.

3. Blague à tabac selon la revendication 1 ou la revendication 2, caractérisée en ce que le film synthétique est préparé à partir d'une polyoléfine, d'un polyester, et/ou d'un polyamide.

4. Blague à tabac selon la revendication 3, caractérisée en ce que le film synthétique est préparé à partir de polyéthylène.

5. Blague à tabac selon la revendication 4, caractérisée en ce que le film en polyéthylène est fait de LLDPE, LDPE, VLDPE, MLDPE, HDPE, ou de mélanges de deux ou plus de ces matières.

6. Blague à tabac selon l'une quelconque des revendications 1 à 5, caractérisée en ce que l'extérieur de la blague est imprimé.

7. Blague à tabac selon l'une quelconque des revendications 1 à 6, caractérisée en ce que l'on a muni la blague d'une fenêtre en chauffant localement le stratifié.

8. Blague à tabac selon l'une quelconque des revendications 1 à 7, caractérisée en ce que la blague est conçue comme un sachet à fond croisé, ou comme un sachet d'emballage.
